# EUROPÄISCHE PATENTSCHRIFT

(11) **EP 2 730 807 B1**
(45) Veröffentlichungstag und Bekanntmachung des Hinweises auf die Patenterteilung: **27.05.2015**
(21) Anmeldenummer: 12192443.5
(22) Anmeldetag: 13.11.2012
(51) Int. Cl.: F16H 1/46, F16H 57/033

(54) **Planetengetriebe mit mehreren Getriebestufen**
Planetary gear with multiple gear stages
Engrenage épicycloïdal avec plusieurs étages de démultiplication

(43) Veröffentlichungstag der Anmeldung: 14.05.2014
(73) Patentinhaber: IMS Gear GmbH, 78166 Donaueschingen (DE)
(72) Erfinder: Kruselburger, Markus, 78652 Deisslingen (DE)
(74) Vertreter: Westphal, Mussgnug & Partner Patentanwälte mbB

(56) Entgegenhaltungen:
- DE-C1- 19 850 169
- JP-A- 63 214 546

## Beschreibung

Die Erfindung betrifft ein Planetengetriebe mit mehreren Getriebestufen gemäß Oberbegriff des Patentanspruchs 1.

Die Funktion von Planetengetrieben ist bekannt. In der Mitte befindet sich ein Sonnenrad, das von einem Antriebsmotor angetrieben wird, der über einen Motorflansch bzw. Antriebsflansch mit dem Planetengetriebe verbunden ist. Das Sonnenrad überträgt seine Bewegung auf wenigstens zwei oder drei umlaufende, eine Getriebestufe bildende Planetenräder, die auf Lagerbolzen eines Planetenträgers angeordnet sind. Bei mehreren Getriebestufen ist der letzte Planetenträger mit einer in einem Abtriebsflansch gelagerten Abtriebswelle fest verbunden und sorgt so für die Kraftübertragung am Abtrieb. Außen laufen die Planetenräder in einem Getriebegehäuse mit Innenverzahnung, dem so genannten Hohlrad.

Aus der DE 20 2006 006 116 U1 ist ein gattungsbildendes Planetengetriebe bekannt, bei dem mehrere Planentenräder von mehreren axial aufeinanderfolgenden Getriebestufen gleichzeitig mit einem Hohlrad kämmen. Dieses Hohlrad ist in axialer Richtung segmentiert, so dass jedes Hohlradsegment einen Hohlradring für eine Getriebestufe bildet. Diese Hohlradringe sind in axialer Aufeinanderfolge unter gegenseitiger Zentrierung mittels Zentriermittel koaxial in einem Gehäuse zusammengesteckt.

Bei einem solchen Planetengetriebe lassen sich dessen einzelne Getriebestufen modulartig unterschiedlich aufbauen, so dass wenigstens zwei Hohlradringe unterschiedliche Innenverzahnungen aufweisen.

Ein solches Planetengetriebe mit in axialer Richtung segmentiertem Hohlrad erfordert zum einen stirnseitige Zentriermittel an jedem der Hohlradringe, die zur axialen Fixierung miteinander in Eingriff stehen und zum anderen Verdrehsicherungsmittel zur radialen Fixierung jedes einzelnen Hohlradringes in dem Gehäuse. Um einen spielfreien Aufbau der einzelnen Komponenten zwischen den Hohlradringen zu sichern, sind enge Toleranzen, insbesondere hinsichtlich der Zentriermittel und der Verdrehsicherungsmittel der Hohlradringe einzuhalten, wodurch die Herstellung der einzelnen Komponenten verteuert wird.

Ausgehend von diesem Stand der Technik ist es Aufgabe der Erfindung, ein Planetengetriebe zu schaffen, welches einen einfachen modulartigen Aufbau zur Realisierung unterschiedlicher Getriebestufen aufweist, wobei drehfest miteinander zu verbindende Komponenten möglichst spielfrei verbunden werden sollen.

Diese Aufgabe wird gelöst durch ein Planetengetriebe mit den Merkmalen des Patentanspruchs 1.

Ein solches Planetengetriebe mit mehreren Getriebestufen, welches ein innenverzahntes Hohlrad umfasst, mit welchem die Planetenräder wenigstens einer Getriebestufe in Eingriff stehen, zeichnet sich erfindungsgemäß dadurch aus, dass wenigstens ein kreisringförmiges Einlegeteil mit einer Außen- und einer Innenverzahnung in dem Hohlrad angeordnet ist, wobei die Außenverzahnung mit dem Hohlrad in Eingriff steht und die Innenverzahnung mit Planetenrädern einer weiteren Getriebestufe kämmt.

Mit diesem erfindungsgemäßen Planetengetriebe können unterschiedliche Getriebestufen in einfacher Weise integriert werden, da lediglich das in der Art eines Zahnkranzes mit einer Innen- und Außenverzahnung ausgebildete Einlegeteil in das allen Getriebestufen zugeordnete einstückige Hohlrad eingesteckt zu werden braucht. Dabei bildet die Außenverzahnung des Einlegeteils mit der Innenverzahnung des Hohlrades die Schnittstelle zwischen diesen beiden Bauteilen und führt ohne weitere Zentrier- oder Fixiermittel zu einer drehfesten Verbindung, wobei durch die Verzahnung diese Verbindung gleichzeitig im Wesentlichen spielfrei ausgeführt werden kann. Das Einlegeteil bildet als Hohlrad zusammen mit dessen Innenverzahnung und mit dieser kämmenden Planetenrädern eine Getriebestufe, die sich von derjenigen Getriebestufe unterscheidet, deren Planetenräder mit dem gemeinsamen Hohlrad kämmen.

Ferner erfordert der Aufbau eines erfindungsgemäßen Planetengetriebes mit mehreren bspw. drei Getriebestufen mit zwei unterschiedlichen Getriebestufen gegenüber dem bekannten Planetengetriebe gemäß der DE 20 2006 006 116 U1 eine geringere Anzahl von Einzelteilen.

Weiterhin ist eine hohe Variabilität im Aufbau unterschiedlicher Getriebestufen gegeben, da mehrere solcher Einlegeteile in einem gemeinsamen Hohlrad zur Bildung unterschiedlicher Getriebe eingebaut werden können, die auch mit unterschiedlichen Innenverzahnungen aufweisen können.

Schließlich ist die Herstellung eines erfindungsgemäßen Planetengetriebes kostengünstig möglich, da lediglich als weiteres Teil das Einlegeteil erforderlich ist, ohne dass das allen Getriebestufen zugeordnete Hohlrad konstruktiv geändert werden müsste.

In einer Ausgestaltung der Erfindung weist das Hohlrad eine Geradverzahnung als Innenverzahnung auf, welche mit der als Geradverzahnung ausgebildeten Außenverzahnung des Einlegeteils in Eingriff steht. Damit ist eine einfache Montage des Einlegeteils in das Hohlrad möglich.

In vorteilhafter Weise ist es gemäß einer weiteren Ausgestaltung der Erfindung vorgesehen, dass die Innenverzahnung des Einlegeteils als Schrägverzahnung ausgebildet ist. Damit kann mit einer mit diesem Einlegeteil gebildeten Getriebestufe mit schrägverzahnten Planetenrädern eine hohe Kraftübertragung realisiert werden.

In einer weiteren Ausgestaltung der Erfindung ist es vorgesehen, dass das Hohlrad in axialer Richtung mit einem ersten und zweiten Innenverzahnungsabschnitt ausgebildet ist, wobei mit dem ersten Innenverzahnungsabschnitt die Planetenräder der wenigstens einen Getriebestufe in Eingriff stehen und mit dem zweiten Innenverzahnungsabschnitt die Außenverzahnung des Einlegeteils in Eingriff steht, und ferner zur Bildung eines Überganges von dem erstem Innenverzahnungsabschnitt in den zweiten Innenverzahnungsabschnitt eine Schulter vorgesehen ist, an welcher das Einlegeteil stirnseitig anliegt.

Durch eine solche Schulter wird eine rotatorische und axial spielfreie Lagerung des Einlegeteils sichergestellt und somit gleichzeitig die Montage erleichtert, da keine zusätzliche Fixierung in axialer Richtung, bspw. durch Verschrauben oder Vernieten erforderlich ist. Vorzugsweise wird zur Bildung der Schulter der Kopfdurchmesser der Verzahnung im Bereich des ersten Innenverzahnungsabschnittes des Hohlrades kleiner als der Kopfdurchmesser der Verzahnung des zweiten Innenverzahnungsabschnittes des Hohlrades gewählt.

Ein weiterer Vorteil ergibt sich weiterbildungsgemäß dadurch, dass zur Bildung eines stirnseitigen Überstandes des Hohlrades der zweite Innenverzahnungsabschnitt in axialer Richtung länger als die axiale Länge des Einlegeteils ausgebildet ist.

Über einen solchen Überstand lässt sich vorzugsweise ein Motorflansch derart ausbilden, dass dieser mit dem Überstand eine Steckverzahnung bildet. Damit kann ein Formschluss zwischen dem Hohlrad und dem Motorflansch realisiert werden, der zu einer erhöhten Steifigkeit führt, wodurch Drehmomente wesentlich besser als im Stand der Technik übertragen werden können. Anstelle eines Motorflansches kann auch eine angegossene Verzahnung realisiert werden.

Einen einfachen Aufbau des Planetengetriebes wird weiterbildungsgemäß dann erreicht, wenn das Einlegeteil mit der weiteren Getriebestufe eine erste Getriebestufe bildet, die mit einem mit einem Antrieb gekoppelten Antriebsritzel kämmt. Vorzugsweise bildet dann die mit dem Hohlrad kämmenden Planetenräder wenigstens eine zweite Getriebestufe.

Es können weitere Getriebestufen vorgesehen werden, bspw. eine dritte, deren Planetenräder ebenso mit dem allen Getriebestufen zugeordneten Hohlrad kämmen.

Die Erfindung wird nachfolgend anhand von Ausführungsbeispielen unter Bezugnahme auf die beigefügten Figuren ausführlich beschrieben. Es zeigen:
- Figur 1: eine Schnittdarstellung eines Planetengetriebes mit mehreren Getriebestufen als Ausführungsbeispiel der Erfindung,
- Figur 2: eine Schnittdarstellung des den Getriebestufen zugeordneten Hohlrades des Planetengetriebes nach Figur 1, und
- Figur 3: eine perspektivische Darstellung des Einlegeteils des Planetengetriebes nach Figur 1,
- Figur 4: eine perspektivische Teildarstellung eines Hohlrades mit montiertem Einlegeteil, und
- Figur 5: eine perspektivische Teildarstellung des Hohlrades nach Figur 4, jedoch ohne das Einlegeteil.

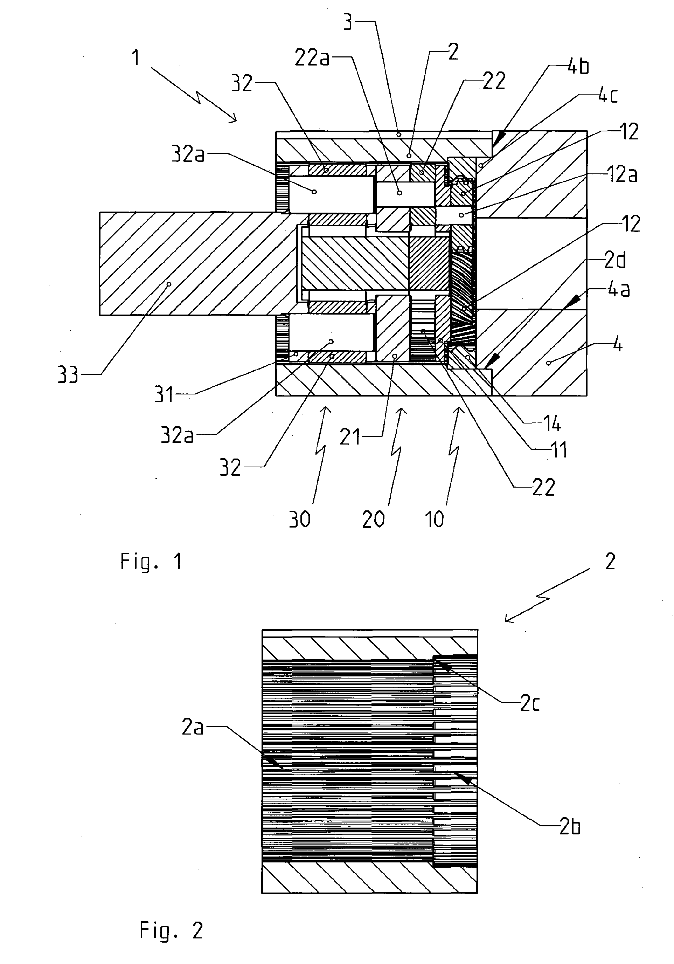

Das Planetengetriebe 1 nach Figur 1 besteht aus einem zylinderförmigen Gehäuse 3 mit drei Getriebestufen 10, 20 und 30. Ein Hohlrad 2 mit einer geradverzahnten Innenverzahnung in einem ersten Innenverzahnungsabschnitt 2a und einem zweiten Innenverzahnungsabschnitt 2b (vgl. Figur 2) erstreckt sich über die gesamte Baulänge des Gehäuses 3, also über alle drei Getriebestufen 10, 20 und 30.

Antriebsseitig wird das Gehäuse 3 von einem Motorflansch 4 mit einer Lagerbohrung 4a für eine Antriebswelle eines Antriebsmotors (nicht dargestellt) verschlossen. Diese Antriebswelle endet in einem Antriebsritzel, welches als Sonnenrad (nicht dargestellt) mit drei Planetenrädern 12 der ersten Getriebestufe 10 kämmt.

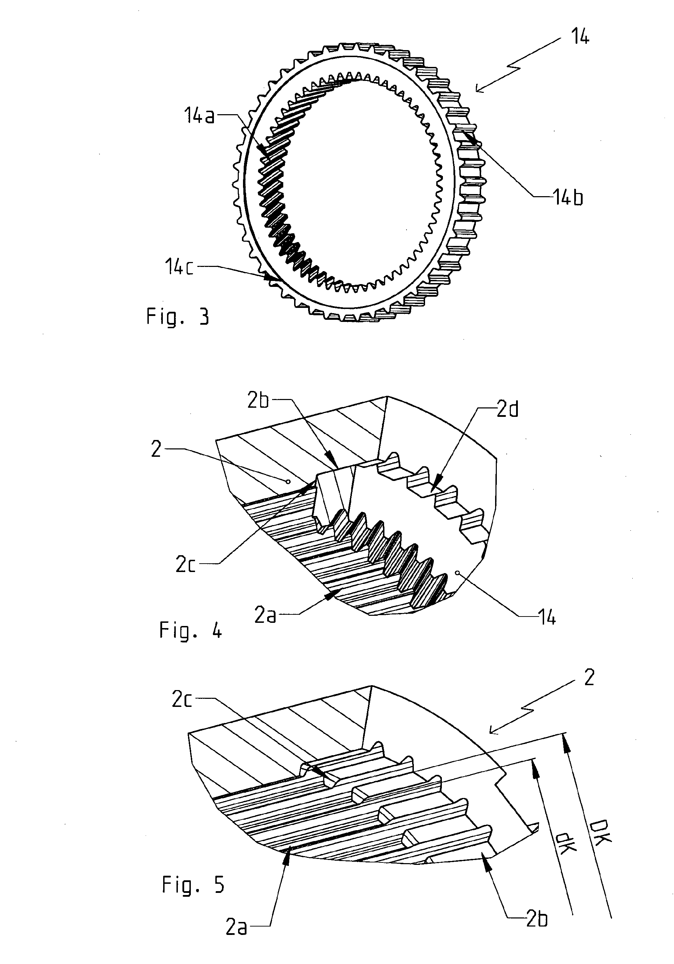

Diese erste Getriebestufe 10 umfasst einen die drei Planetenräder 12 tragenden Planetenträger 11 mit einem abtriebsseitigen Sonnenrad 13 sowie einem kreisringförmigen Einlegeteil 14, welches gemäß Figur 3 in der Art eines Zahnkranzes mit einer schrägverzahnten Innenverzahnung 14a und einer geradverzahnten Außenverzahnung 14b ausgebildet ist. Die drei Planetenräder 12 der ersten Getriebestufe 10 sind jeweils auf einem mit dem Planetenträger 11 angeordneten Bolzen 12a drehbar gelagert.

Das Einlegeteil 14 wird antriebsseitig in das Hohlrad 2 eingesteckt, so dass die Außenverzahnung des Einlegeteils 14 in die geradverzahnte Innenverzahnung des zweiten Innenverzahnungsabschnittes 2b des Hohlrades 2 formschlüssig eingreift.

In axialer Richtung ist die Innenverzahnung des Hohlrades 2 gemäß Figur 2 in zwei Abschnitte mit dem eine geradverzahnte Innenverzahnung aufweisenden ersten Verzahnungsabschnitt 2a und dem ebenso eine geradverzahnte Innenverzahnung aufweisenden zweiten Innenverzahnungsabschnitt 2b geteilt, wobei der zweite Innenverzahnungsabschnitt 2b, wie oben bereits ausgeführt, das Einlegeteil 14 aufnimmt, das an einer am Übergang der beiden Innenverzahnungsabschnitte 2a und 2b gebildeten Schulter 2c anliegt.

Gemäß Figur 5 entsteht diese Schulter 2c dadurch, dass der Kopfkreisdurchmesser Dₖ der Verzahnung des zweiten Innenverzahnungsabschnittes 2b größer ist als der Kopfkreisdurchmesser dₖ der Verzahnung des ersten Innenverzahnungsabschnittes 2a, wobei jedoch die Fußkreisdurchmesser für die Verzahnung der beiden Innenverzahnungsabschnitte 2a und 2b gleich sind, d. h. dass lediglich die Zahnhöhe der Verzahnung des zweiten Innenverzahnungsabschnittes 2b gegenüber der Zahnhöhe der Verzahnung des ersten Innenverzahnungsabschnittes 2a verkürzt ist.

Gemäß Figur 4 ist die axiale Länge des zweiten Innenverzahnungsabschnittes 2b des Hohlrades 2 länger als die axiale Länge des Einlegeteils 14, so dass an der antriebsseitigen Stirnseite des Hohlrades 2 gegenüber der Stirnseite des in das Hohlrad 2 eingesteckten Einlegeteils 14 ein Überstand 2d entsteht.

Dieser Überstand 2d wird dazu genutzt, um mit dem Motorflansch 4 eine Steckverzahnung zu bilden. Hierzu ist der Motorflansch 4 auf der motorabgewandten Stirnfläche 4b mit einem kreisringzylinderförmigen Anschlussflansch 4c ausgebildet, dessen Mantelfläche eine an die Innenverzahnung 2b des Überstandes 2d angepasste Außenverzahnung aufweist. So kann dieser Motorflansch 4 über dessen Anschlussflansch 4c zur Bildung einer Steckverzahnung in das Hohlrad 2 gesteckt werden, so dass die Stirnfläche 4b des Motorflansches 4 flächenschlüssig an den Stirnflächen des Gehäuses 3 und des Hohlrades 2 anliegt.

Die Außenverzahnung 14b des Einlegeteils 14 ist an die Innenverzahnung des zweiten Innenverzahnungsabschnittes 2b des Hohlrades 2, also an dessen verkürzten Zähne mit einem flachen Scheitel angepasst. Damit wird eine formschlüssige und spielfreie Verbindung zwischen dem Einlegeteil 14 und dem Hohlrad 2 realisiert, ohne dass zusätzliche Zentrier- oder Verbindungsmittel erforderlich wären. Die abtriebsseitige Stirnfläche des Einlegeteils 14 ist mit einer kreisringförmigen Schulter 14c geringfügig abgesetzt.

Der erste Innenverzahnungsabschnitt 2a des Hohlrades 2 dient zur Aufnahme der zweiten und dritten Getriebestufe 20 und 30.

Die zweite Getriebestufe 20 umfasst einen Planetenträger 21 mit drei auf Bolzen 22a angeordneten Planetenrädern 22, welche mit der Innenverzahnung des ersten Innenverzahnungsabschnittes 2a des Hohlrades 2 kämmen sowie ein abtriebsseitiges Sonnenrad 23, welches mit vier Planetenrädern 32 der dritten Getriebestufe 30 in Eingriff steht.

Bei dieser dritten Getriebestufe 30 sind die mit der Innenverzahnung des ersten Innenverzahnungsabschnittes 2a kämmenden vier Planetenräder 32 auf Bolzen 32a gelagert, welche auf einem Planetenträger 31 angeordnet sind. Ferner weist dieser Planetenträger 31 abtriebsseitig eine Abtriebswelle 33 des Planetengetriebes 1 auf. Ein Abtriebsflansch (nicht dargestellt) schließt die Abtriebsseite des Gehäuses 3 des Planetengetriebes 1 ab.

### Bezugszeichenliste

- 1: Planetengetriebe
- 2: Hohlrad des Planetengetriebes 1
- 2a: erster Innenverzahnungsabschnitt des Hohlrades 2
- 2b: zweiter Innenverzahnungsabschnitt des Hohlrades 2
- 2c: Schulter am Übergang des ersten Innenverzahnungsabschnittes 2a zum zweiten Innenverzahnungsabschnitt 2b
- 2d: Überstand des Hohlrades 2
- 3: Gehäuse des Planetengetriebes 1
- 4: Motorflansch des Planetengetriebes 1
- 4a: Lagerbohrung des Motorflansches 4
- 4b: abtriebsseitige Stirnfläche des Motorflansches 4
- 4c: Anschlussflansch der Stirnfläche 4b

- 10: erste Getriebestufe des Planetengetriebes 1
- 11: Planetenträger der ersten Getriebestufe 10
- 12: Planetenrad des Planetenträgers 11
- 12a: Bolzen des Planetenrades 12
- 13: Sonnenrad des Planetenträgers 11
- 14: Einlegeteil, Zahnkranz der ersten Getriebestufe 10
- 14a: Innenverzahnung des Einlegeteils 14
- 14b: Außenverzahnung des Einlegeteils 14
- 14c: stirnseitig Schulter des Einlegeteils 14

- 20: zweite Getriebestufe des Planetengetriebes 1
- 21: Planetenträger der zweiten Getriebestufe 20
- 22: Planetenrad des Planetenträgers 21
- 22a: Bolzen des Planetenrades 22
- 23: Sonnenrad des Planetenträgers 21

- 30: dritte Getriebestufe des Planetengetriebes 1
- 31: Planetenträger der dritten Getriebestufe 30
- 32: Planetenrad des Planetenträgers 31
- 32a: Bolzen des Planetenrades 32
- 33: Abtriebswelle des Planetenträgers 31

## Patentansprüche

1. Planetengetriebe (1) mit mehreren Getriebestufen (10, 20, 30), umfassend ein innenverzahntes Hohlrad (2), mit welchem die Planetenräder (22, 32) wenigstens einer Getriebestufe (20, 30) in Eingriff stehen,
**dadurch gekennzeichnet, dass** wenigstens ein kreisringförmiges Einlegeteil (14) mit einer Außen- und einer Innenverzahnung (14a, 14b) in dem Hohlrad (2) angeordnet ist, wobei die Außenverzahnung (14b) mit dem Hohlrad (2) in Eingriff steht und die Innenverzahnung (14a) mit Planetenrädern (12) einer weiteren Getriebestufe (10) kämmt.

2. Planetengetriebe(1) nach Anspruch 1,
**dadurch gekennzeichnet, dass** das Hohlrad (2) eine Geradverzahnung aufweist, welche mit der als Geradverzahnung ausgebildeten Außenverzahnung (14b) des Einlegeteils (14) in Eingriff steht.

3. Planetengetriebe (1) nach Anspruch 1 oder 2,
**dadurch gekennzeichnet, dass** die Innenverzahnung (14a) des Einlegeteils (14) als Schrägverzahnung ausgebildet ist.

4. Planetengetriebe (1) nach einem der vorhergehenden Ansprüche,
**dadurch gekennzeichnet, dass**
- das Hohlrad (2) in axialer Richtung mit einem ersten und zweiten Innenverzahnungsabschnitt (2a, 2b) ausgebildet ist, wobei mit dem ersten Innenverzahnungsabschnitt (2a) die Planetenräder (22, 32) der wenigstens einen Getriebestufe (20, 30) in Eingriff stehen und mit dem zweiten Innenverzahnungsabschnitt (2b) die Außenverzahnung (14b) des Einlegeteils (14) in Eingriff steht, und
- zur Bildung eines Überganges von dem erstem Innenverzahnungsabschnitt (2a) in den zweiten Innenverzahnungsabschnitt (2b) eine Schulter (2c) vorgesehen ist, an welcher das Einlegeteil (14) stirnseitig anliegt.

5. Planetengetriebe (1) nach Anspruch 4,
**dadurch gekennzeichnet, dass** zur Bildung der Schulter (2c) der Kopfkreisdurchmesser (dₖ) der Verzahnung im Bereich des ersten Innenverzahnungsabschnittes (2a) des Hohlrades (2) kleiner ist als der Kopfkreisdurchmesser (Dₖ) der Verzahnung des zweiten Innenverzahnungsabschnittes (2b) des Hohlrades (2).

6. Planetengetriebe (1) nach Anspruch 4 oder 5,
**dadurch gekennzeichnet, dass** zur Bildung eines stirnseitigen Überstandes (2d) des Hohlrades (2) der zweite Innenverzahnungsabschnitt (2b) in axialer Richtung länger als die axiale Länge des Einlegeteils (14) ausgebildet ist.

7. Planetengetriebe (1) nach Anspruch 6,
**dadurch gekennzeichnet, dass** ein Motorflansch (4) ausgebildet ist mit dem Überstand (2d) eine Steckverzahnung zu bilden.

8. Planetengetriebe (1) nach einem der vorhergehenden Ansprüche,
**dadurch gekennzeichnet, dass** das Einlegeteil (14) mit der weiteren Getriebestufe eine erste Getriebestufe (10) bildet, die mit einem mit einem Antrieb gekoppelten Antriebsritzel kämmt.

9. Planetengetriebe (1) nach Anspruch 4,
**dadurch gekennzeichnet, dass** die mit dem Hohlrad (2) kämmenden Planetenräder (22) wenigstens eine zweite Getriebestufe (20) bilden.

10. Planetengetriebe (1) Anspruch 5,
**dadurch gekennzeichnet, dass** als dritte Getriebestufe (30) mit dem Hohlrad (2) kämmende Planetenräder (32) vorgesehen sind.

## Claims

1. Planetary gear set (1) with several gear stages (10, 20, 30), comprising an internally geared annular ring (2), with which the planet gears (22, 32) are in engagement with at least one gear stage (20, 30), **characterized in that** at least one circular insert part (14) with external and internal gearing (14a, 14b) is arranged in the annular ring (2), whereby the external gearing (14b) is in engagement with the annular ring (2) and the internal gearing (14a) meshes with planet gears (12) of another gear stage (10).

2. Planetary gear set (1) according to claim 1, **characterized in that** the annular ring (2) has straight gearing , which is in engagement with the external gearing (14b) of the insert part (14) that is designed as straight gearing.

3. Planetary gear set (1) according to claim 1 or 2, **characterized in that** the internal gearing (14a) of the insert part (14) is designed as helical gearing.

4. Planetary gear set (1) according to any one of the above claims **characterized in that**
- the annular ring (2) is designed with a first and second internal gearing section (2a, 2b) in axial direction, whereby the planet gears (22, 32) of the at least one gear stage (20, 30) are in engagement with the first internal gearing section (2a) and the external gearing (14b) of the insert part (14) is in engagement with the second internal gearing section (2b) and
- for forming a transition from the first internal gearing section (2a) to the second internal gearing section (2b), a shoulder (2c) is provided, which the insert part (14) contacts with its face side,

5. Planetary gear set (1) according to claim 4, **characterized in that** for forming the shoulder (2c), the crown line diameter (Dₖ) of the gearing in the area of the first internal gearing section (2a) of the annular ring (2) is smaller than the crown line diameter (Dₖ) of the gearing of the second internal gearing section (2b) of the annular ring (2) .

6. Planetary gear set (1) according to claim 4 or 5, **characterized in that** for forming a face-side projection (2d) of the annular ring (2), the second internal gearing section (2b) is longer in axial direction than the axial length of the insert part (14).

7. Planetary gear set (1) according to claim 6, **characterized in that** a motor flange (4) is designed to form a spline with the projection (2d).

8. Planetary gear set (1) according to any one of the above claims **characterized in that** the insert part (14) forms a first gear stage (10) with the other gear stage, which meshes with a drive pinion coupled with a drive.

9. Planetary gear set (1) according to claim 4, **characterized in that** the planet gears (22) that mesh with the annular ring (2) form at least one second gear stage (20).

10. Planetary gear set (1) claim 5, **characterized in that** the planet gears (32) meshing with the annular ring (2) are provided as the third gear stage (30).

## Revendications

1. Engrenage planétaire (1) à plusieurs étages (10, 20, 30) comprenant une couronne à denture interne (2) avec laquelle les roues planétaires (22, 32) d'au moins un étage (20, 30) de l'engrenage viennent en prise,
**caractérisé en ce qu'**
au moins une pièce d'insertion (14) en forme d'anneau circulaire équipée d'une denture externe et d'une denture interne (14a, 14b) est située dans la couronne (2), la denture externe (14b) venant en prise avec la couronne (2) et la denture interne (14a) engrenant avec des roues planétaires (12) d'un autre étage (10) de l'engrenage.

2. Engrenage planétaire (1) conforme à la revendication 1,
**caractérisé en ce que**
la couronne (2) comporte une denture droite qui vient en prise avec la denture externe (14b) de la pièce d'insertion (14) qui est réalisée sous la forme d'une denture droite.

3. Engrenage planétaire (1) conforme à la revendication 1 ou 2,
**caractérisé en ce que**
la denture interne (14a) de la pièce d'insertion (14) est réalisée sous la forme d'une denture hélicoïdale.

4. Engrenage planétaire (1) conforme à l'une des revendications précédentes,
**caractérisé en ce que** :
- la couronne (2) est formée en direction axiale avec un premier segment de denture interne et un second segment de denture externe (2a, 2b), les roues planétaires (22, 32) de l'étage d'engrenage (20, 30) venant en prise avec le premier segment de denture interne (2a), et la denture externe (14b) de la pièce d'insertion (14) venant en prise avec le second segment de denture interne (2b), et
- pour former la transition entre le premier segment de denture interne (2a) et le second segment de denture externe (2b) il est prévu un épaulement (2c) sur lequel s'applique côté frontal la pièce d'insertion (14).

5. Engrenage planétaire (1) conforme à la revendication 4,
**caractérisé en ce que**
pour permettre de former l'épaulement (2c) le diamètre du cercle de tête (dk) de la denture dans la zone du premier segment de denture interne (2a) de la couronne (2) est inférieur au diamètre du cercle de tête (Dk) de la denture du second segment de denture interne (2b) de la couronne (2).

6. Engrenage planétaire (1) conforme à la revendication 4 ou 5,
**caractérisé en ce que**
pour former une projection frontale (2d) de la couronne (2) le second segment de denture interne (2b) est plus long en direction axiale que la longueur axiale de la pièce d'insertion (14).

7. Engrenage planétaire (1) conforme à la revendication 6,
**caractérisé en ce qu'**
une bride de moteur (4) est réalisée pour former une cannelure avec la projection (2d).

8. Engrenage planétaire (1) conforme à l'une des revendications précédentes,
**caractérisé en ce que**
la pièce d'insertion (14) forme avec l'autre étage d'engrenage un premier étage d'engrenage (10) qui engrène avec un pignon d'entrainement accouplé à un entrainement.

9. Engrenage planétaire (1) conforme à la revendication 4,
**caractérisé en ce que**
les roues planétaires (22) engrenant avec la couronne (2) forment au moins un second étage d'engrenage (20).

10. Engrenage planétaire (1) conforme à la revendication 5,
**caractérisé en ce que**
des roues planétaires (32) engrenant avec la couronne (2) forment un troisième étage d'engrenage (30).
